# EUROPÄISCHE PATENTSCHRIFT

(11) **EP 1 368 728 B1**
(45) Veröffentlichungstag und Bekanntmachung des Hinweises auf die Patenterteilung: **27.01.2010**
(21) Anmeldenummer: 02727204.6
(22) Anmeldetag: 11.03.2002
(51) Int. Cl.: G06F 1/14, H04J 3/06

(54) **SYNCHRONES, GETAKTETES KOMMUNIKATIONSSYSTEM MIT RELATIVUHR UND VERFAHREN ZUM AUFBAU EINES SOLCHEN SYSTEMS**
SYNCHRONOUS, CLOCKED COMMUNICATION SYSTEM WITH A RELATIVE TIME CLOCK AND METHOD FOR ESTABLISHING SUCH A SYSTEM
SYSTEME DE COMMUNICATION SYNCHRONE ET CADENCE, COMPORTANT UNE HORLOGE RELATIVE, ET PROCEDE POUR REALISER UN TEL SYSTEME

(30) Priorität: 16.03.2001 DE 10113260
(43) Veröffentlichungstag der Anmeldung: 10.12.2003
(73) Patentinhaber: SIEMENS AKTIENGESELLSCHAFT, 80333 München (DE)
(72) Erfinder: FRANKE, Michael, 91056 Erlangen (DE); HEIDER, Alexander, 91058 Erlangen (DE); KIESEL, Martin, 91099 Poxdorf (DE)
(86) Internationale Anmeldenummer: PCT/DE2002/000855
(87) Internationale Veröffentlichungsnummer: WO 2002/075509

(56) Entgegenhaltungen:
- WO-A-98/14851
- DE-A- 10 004 425

## Beschreibung

Die Erfindung bezieht sich auf ein synchrones, getaktetes Kommunikationssystem mit Relativuhr und ein Verfahren zum Aufbau eines solchen Systems.

Unter einem synchronen, getakteten Kommunikationssystem mit Äquidistanz-Eigenschaften versteht man ein System aus wenigstens zwei Teilnehmern, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein-/ Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Unter Kontrolleinheiten werden im folgenden Regler- oder Steuerungseinheiten jeglicher Art verstanden. Als Datennetze werden beispielsweise Bussysteme wie z.B. Feldbus, Profibus, Ethernet, Industrial Ethernet, FireWire oder auch PC-interne Bussysteme (PCI), etc. verwendet.

In verteilten Automatisierungssystemen, beispielsweise im Bereich Antriebstechnik, werden u.a. taktsynchrone Datennetze bzw. Bussysteme eingesetzt. Dabei werden manche angeschlossenen Teilnehmer als Master-Geräte, z.B. Kontrolleinheiten wie numerische oder speicherprogrammierbare Steuerungen oder Projektiergeräte, und andere Teilnehmer als Slave-Geräte, wie z.B. Antriebe, oder Peripheriegeräte, verwendet. Automatisierungskomponenten beider Kategorien können taktsynchron arbeiten, d.h., diese Teilnehmer können sich auf einen verwendeten Kommunikationstakt des Datennetzes synchronisieren. Dies bedeutet, dass der Kommunikationstakt von den Teilnehmern über das verwendete Datennetz übernommen und synchron zu diesem Kommunikationstakt bestimmte Vorgänge gesteuert werden. Gemäss IEC 61491, EN61491 SERCOS interface - Technische Kurzbeschreibung (http://www.sercos.de/deutsch/doku_freier_bereich.htm) wird dies gegenwärtig in verteilten Automatisierungssystemen angewendet und durchgeführt. Allerdings ist es gegenwärtig nicht möglich, dass eine für ein solches System gültige Relativuhr eingeführt wird, auf dessen jeweils gültige Relativzeit sich alle an das Kommunikationssystem angeschlossene Teilnehmer synchronisieren können. Dadurch können beispielsweise applikative Ereignissequenzen nicht oder zumindest nicht mit genügend großer zeitlicher Genauigkeit festgelegt und durchgeführt werden.

Aufgabe der Erfindung ist es, ein synchrones, getaktetes Kommunikationssystem mit Äquidistanz-Eigenschaften und Relativuhr zwischen wenigstens zwei Teilnehmern und einem Datennetz und ein Verfahren zur Einführung einer Relativuhr in ein solches Kommunikationssystem anzugeben, bei dem sich alle an das Kommunikationssystem angeschlossenen Teilnehmer auf diese Relativuhr synchronisieren können.

Diese Aufgabe wird durch ein Verfahren zum Aufbau eines synchronen, getakteten Kommunikationssystems mit Äquidistanzeigenschaften im Bereich industrieller Anlagen zwischen wenigstens zwei Teilnehmern, insbesondere Automatisierungskomponenten, und wenigstens einem Datennetz dadurch gelöst, dass insbesondere beim Hochfahren des Systems eine systemweit geltende, eindeutige Relativuhr eingeführt wird und eine Untermenge der oder alle an das Datennetz angeschlossenen Teilnehmer wenigstens einmal auf die, durch die Relativuhr bestimmte Relativzeit synchronisiert werden, wobei die Relativzeit über das Datennetz an alle Teilnehmer übertragen wird.

Diese Aufgabe wird durch ein synchrones, getaktetes Kommunikationssystem mit Äquidistanzeigenschaften im Bereich industrieller Anlagen zwischen wenigstens zwei Teilnehmern, insbesondere Automatisierungskomponenten und wenigstens einem Datennetz dadurch gelöst, dass das Kommunikationssystem zumindest ein Mittel aufweist, das insbesondere beim Hochfahren des Systems eine systemweit geltende, eindeutige Relativuhr einführt und alle oder eine Untermenge der angeschlossenen Teilnehmer wenigstens einmal auf die, durch die Relativuhr bestimmte Relativzeit synchronisiert, wobei die Relativzeit über das Datennetz an alle Teilnehmer übertragen wird.

Der Erfindung liegt die Erkenntnis zugrunde, dass bei Verwendung eines taktsynchronen Bussystems bzw. Datennetzes in verteilten Automatisierungssystemen allen Teilnehmern des Kommunikationssystems der Beginn jedes neuen Kommunikationszyklus beispielsweise durch die Übertragung eines speziellen Datenpakets, z.B. einem sogenannten global control-Datenpaket, angezeigt wird. Neben diesem Verfahren gibt es noch andere Verfahren, die eine Taktsynchronisation zwischen den Teilnehmern ermöglichen, auf die die offenbarte Erfindung selbstverständlich ebenfalls anwendbar ist. Zusammen mit der Information über die Länge eines Kommunikationstakts, die wenigstens beim Hochfahren des Systems festgelegt und an alle Teilnehmer verteilt wird, können sich alle Teilnehmer auf den verwendeten Takt synchronisieren. Diese Informationen werden dabei von einem ausgezeichneten Master-Teilnehmer, dem so genannten Taktschläger an alle Teilnehmer des Kommunikationssystems übermittelt. Weist dieser Taktschläger zusätzlich eine Relativuhr auf, kann die jeweilige aktuelle Relativzeit auf dem selben Übertragungsweg an alle angeschlossenen Teilnehmer verteilt werden, wodurch für alle angeschlossenen Teilnehmer dieselbe Relativzeit gilt.

Eine besonders vorteilhafte Ausgestaltung der Erfindung ist **dadurch gekennzeichnet, dass** als Teilnehmer des Kommunikationssystems wenigstens eine Kontrolleinheit, wenigstens eine zu steuernde Einheit, und wenigstens eine dezentrale Ein-/Ausgabe-Baugruppe, die als Schnittstelle zwischen dem Datennetz und der zu steuernden Einheit bidirektional den Austausch von Signalen zwischen der zu steuernden Einheit und der Kontrolleinheit mittels des Datennetzes vornimmt, an das Datennetz angeschlossen sind, wobei beispielsweise die Kontrolleinheit als Taktschläger eingesetzt wird. Unter Einheit sind insbesondere auch Automatisierungskomponenten, Maschinen, Antriebe, etc. zu verstehen. Der im folgenden auch verwendete Begriff Gerät wird synonym zum Begriff Einheit benutzt.

Eine außerordentlich vorteilhafte Ausgestaltung der Erfindung ist **dadurch gekennzeichnet, dass** die durch die Relativuhr systemweit eingeführte, eindeutige Relativzeit sich aus zwei Teilen zusammensetzt, wobei der erste Teil den aktuellen Kommunikationszyklus charakterisiert und der zweite Teil den Zeitpunkt innerhalb des aktuellen Kommunikationszyklus des Kommunikationssystems bestimmt. Vorteil dieser Ausgestaltung ist es, dass dadurch jeder beliebige Kommunikationszyklus und darüber hinaus jeder Zeitpunkt innerhalb eines beliebigen Kommunikationszyklusses exakt bestimmbar ist, wodurch die zeitliche Genauigkeit beim Erfassen und Registrieren bzw. beim Schalten von Ereignissen oder bei beliebigen Steuer- und Regelungsvorgängen außerordentlich verbessert wird.

Eine weitere vorteilhafte Ausgestaltung der Erfindung ist **dadurch gekennzeichnet, dass** der Kommunikationszyklus durch eine digitalisierte Zahl oder eine absolute Zeiteinheit, die sich aus der Dauer des Kommunikationstakts ableitet, dargestellt wird, wobei die Genauigkeit der Relativuhr in einem Bereich zwischen der Dauer eines Kommunikationstakts und 1µs einstellbar ist. Dadurch ist es möglich die für die jeweilige Situation optimale Form der Darstellung zu wählen, so ist es beispielsweise bei der zeitlichen Einordnung von Ereignissen günstiger, weil anschaulicher eine Absolutzeitdarstellung zu wählen, als eine abstrakte Darstellung.

Eine weitere vorteilhafte Ausgestaltung der Erfindung ist **dadurch gekennzeichnet, dass** die systemweit geltende, eindeutige Relativuhr und damit die Relativzeit bis zum Herunterfahren des Systems für alle Teilnehmer gültig bleibt und dass alle Teilnehmer bis zum Herunterfahren des Systems auf die systemweit geltende, eindeutige Relativuhr und damit die Relativzeit synchronisiert bleiben. Dadurch wird gewährleistet, dass für alle Teilnehmer während der Laufzeit des Systems die selbe Relativzeit gilt, wodurch insbesondere die Gleichzeitigkeit von Ereignissen im Rahmen der vorgegebenen zeitlichen Auflösung der Relativzeit gewährleistet ist. Dadurch wird der Einfluss von teilnehmerspezifischen Totzeiten erheblich reduziert.

Eine weitere vorteilhafte Ausgestaltung der Erfindung ist **dadurch gekennzeichnet, dass** die Dauer des Kommunikationstakts einstellbar ist und wenigstens einmal beim Hochfahren des Systems festgelegt wird, wobei die Dauer eines Kommunikationstakts zwischen 10µs und 10ms betragen kann. Dadurch ist es möglich, die Länge eines Kommunikationstakts optimal für jeden spezifischen Anwendungsfall, insbesondere jede individuelle Konfiguration des betrachteten Kommunikationssystems festzulegen.

Eine weitere besonders vorteilhafte Ausgestaltung der Erfindung ist **dadurch gekennzeichnet, dass** Signale eines zu steuernden Geräts bei deren Registrierung und Erfassung am Eingang einer dezentralen Ein-/Ausgabe-Baugruppe von der Ein-/Ausgabe-Baugruppe mit einem Stempel versehen werden, der sich aus der zu diesem Zeitpunkt aktuellen Relativzeit und dem Erfassungs-Schaltereignis zusammensetzt, in ein für das Datennetz kompatibles Datenformat umgewandelt, die Daten mit diesem Stempel über das Datennetz an die Kontrolleinheit weitergeleitet, dort ausgewertet und verarbeitet werden, wobei die Relativzeit als Teil des Stempels aus zwei Teilen besteht, wobei der eine Teil den Kommunikationszyklus des Kommunikationssystems bestimmt, in welchem die Registrierung und Signalerfassung erfolgt ist und der andere Teil den Zeitpunkt relativ zum Anfang oder zum Ende des Kommunikationszyklus des Kommunikationssystems bestimmt, in welchem die Registrierung und Signalerfassung erfolgt ist. Dadurch kann der Erfassungszeitpunkt von Ereignissen beispielsweise eines zu steuernden Geräts mit außerordentlicher Präzision bestimmt und gespeichert werden und steht damit zur Berechnung von abhängigen Ereignissen jederzeit zur Verfügung.

Eine weitere außerordentlich vorteilhafte Ausgestaltung der Erfindung ist **dadurch gekennzeichnet, dass** Daten, die für das zu steuernde Gerät bestimmt sind, vor der Übertragung an die dezentrale Ein-/Ausgabe-Baugruppe von der Kontrolleinheit mit einem Stempel versehen werden, der sich aus einer Relativzeit, bezogen auf den Zeitpunkt der geplanten Signalausgabe und einem Ausgabe-Schaltereignis zusammensetzt, und die Daten mit diesem Stempel über das Datennetz an die Ein-/Ausgabe-Baugruppe übertragen werden, wobei die Relativzeit als Teil des Stempels aus zwei Teilen besteht, wobei der eine Teil den Kommunikationszyklus des Kommunikationssystems bestimmt in dem die Signalausgabe erfolgen soll und der andere Teil den Zeitpunkt relativ zum Anfang oder zum Ende des Kommunikationszyklus des Kommunikationssystems bestimmt, in welchem die Signalausgabe erfolgen soll und dass Daten, die mit einem solchen Stempel, der sich auf die geplante Signalausgabe bezieht, versehen und für das zu steuernde Gerät bestimmt sind, von der dezentralen Ein-/Ausgabe-Baugruppe in für das zu steuernde Gerät interpretierbare Signale umgewandelt und zu dem Zeitpunkt, der durch den übertragenen Stempel vorgegeben ist, am Ausgang der dezentralen Ein-/Ausgabe-Baugruppe gemäss des vorgegebenen Schaltereignisses geschaltet und an das zu steuernde Gerät ausgegeben werden. Von besonderem Vorteil ist diese Ausgestaltung dadurch, dass abhängig vom Zeitpunkt der Registrierung eines Eintrittsereignisses am Eingang einer dezentralen Ein-/Ausgabe-Baugruppe das Schalten eines Ausgabeereignisses am Ausgang der dezentralen Ein-/Ausgabe-Baugruppe exakt geplant und mit einer außerordentlichen zeitlichen Präzision durchgeführt werden kann, was im Bereich Antriebstechnik in verteilten Automatisierungssystemen, beispielsweise bei holzverarbeitenden Maschinen oder für das Schalten von Nocken, etc. außerordentlich vorteilhaft ist. Der zeitliche Abstand zwischen Eingangsereignis und Ausgabeereignis ist also für jede beliebige Situation im geschilderten Anwendungsbereich individuell mit jeweils der selben hohen zeitlichen Genauigkeit einstellbar und erreichbar, wodurch ebenfalls die Abhängigkeit von Totzeiten von betroffenen Teilnehmern des Kommmunikationssystems sehr stark reduziert wird. Auf Basis dieser Ausprägungen kann somit ein isochroner Datenaustausch bzw. die Steuerung von Ereignissen, bzw. Ereignisabfolgen innerhalb des Kommunikationssystems zwischen den Teilnehmern ermöglicht, bzw. erheblich verbessert werden

Eine weitere besonders vorteilhafte Ausgestaltung der Erfindung ist **dadurch gekennzeichnet, dass** die Schaltung und Weiterleitung von Signalen an ein zu steuerndes Gerät am Ausgang einer dezentralen Ein-/Ausgabe-Baugruppe in zeitlich einstellbarer, definierter Abhängigkeit relativ zum Zeitpunkt der Registrierung und Erfassung von Signalen eines zu steuernden Geräts am Eingang einer dezentralen Ein-/Ausgabe-Baugruppe erfolgt. Der besondere Vorteil diese Ausprägung liegt darin, dass dadurch applikative Ereignissequenzen realisiert werden können, die insbesondere bei Holzbearbeitungsmaschinen beispielsweise bei der Herstellung von Möbelbrettern von herausragender Bedeutung sind. So müssen dabei beispielsweise abhängig von der Erfassung von Holzvorder- oder Rückkanten Aggregate für das Aufbringen oder Abschneiden von Umleimern mit hoher zeitlicher Präzision geschaltet werden.

Eine weitere vorteilhafte Ausgestaltung der Erfindung ist **dadurch gekennzeichnet, dass** Daten die von einem oder mehreren Teilnehmern des Kommunikationssystems bis zum Herunterfahren des Systems gespeichert werden, zusammen mit der jeweils aktuellen Relativzeit des Systems gespeichert werden und die gemeinsame Auswertung und/oder Darstellung der so aufgezeichneten Daten auf Basis der jeweils gespeicherten Relativzeit des Systems erfolgt. Dadurch können auf verschiedene Teilnehmer verteilte Traceaufzeichnungen auf Basis der einheitlichen Relativzeit für einen Echtzeittrace außerordentlich bequem zusammengeführt und ausgewertet werden, wobei auf sehr einfache Weise Informationen über beispielsweise das Reaktionsverhalten der Teilnehmer gewonnen werden kann, aus denen z.B. Rückschlüsse auf eventuelle bevorstehende Ausfälle von einzelnen Automatisierungskomponenten gezogen werden können.

Eine weitere, besonders vorteilhafte Ausgestaltung der Erfindung ist **dadurch gekennzeichnet, dass** ein oder mehrere Teilnehmer des Kommunikationssystems, insbesondere Automatisierungskomponenten, die die Relativuhr unterstützen, Kenndaten zur Verfügung stellen, die von wenigstens einer Kontrolleinheit über das Datennetz abgerufen und ausgewertet werden können, wobei die Kenndaten wenigstens den Support der Relativuhr, und/oder die mögliche einstellbare Genauigkeit und/oder wenigstens eine Einstellmöglichkeit der Relativuhr und/oder den Support wenigstens eines Mechanismus, der sich aus dem Einsatz einer Relativuhr in einem Kommunikationssystem ableitet, enthalten. Vorteil ist, dass diese Kenndaten als Gerätebeschreibungen sowohl während des laufenden Betriebs online aus dem oder den entsprechenden Teilnehmern, insbesondere der oder den Automatisierungskomponenten, auslesbar sind, als auch offline als Beschreibungsinformationen bereitgestellt werden kann, wodurch der Umfang der zur Verfügung gestellten genannten Eigenschaften, insbesondere der Support der abgeleiteten Mechanismen, wie z. B. genaues Erfassen von Schaltereignissen, genaues Schalten der Aktorik, etc., exakt dokumentiert und damit der Einsatzbereich des entsprechenden Teilnehmers genauestens abgegrenzt ist.

Eine weitere vorteilhafte Ausgestaltung der Erfindung ist **dadurch gekennzeichnet, dass** ein oder mehrere Teilnehmer des Kommunikationssystems, insbesondere Automatisierungskomponenten, die Erfassung von Ereignissen basierend auf der Relativuhr nur in bestimmten Arbeitsphasen und/oder zu bestimmten Zeitpunkten durchführen können. Dies ist von besonderem Vorteil dadurch, weil dadurch die Erfassung von Ereignissen basierend auf der Relativuhr von den entsprechenden Automatisierungskomponenten nur zu den relevanten und notwendigen Zeitpunkten möglich ist, wodurch unnötige Erfassungen und damit die Entstehung überflüssiger Datenmengen vermieden werden. Dies kann beispielhaft über Enable/Disable-Mechanismen über das Datennetz beispielsweise ausgehend von einer Kontrolleinheit oder über eine externe Beschaltung an der Automatisierungskomponente realisiert werden.

Von besonderem Vorteil ist es darüber hinaus, dass die offenbarten Verfahren, insbesondere in Bezug auf die Relativuhr mit den genannten applikativen Ausprägungen wie z. B. Erfassung von Schaltereignissen, präzises Schalten von Ausgängen, Erfassung von internen Istzuständen inkl. zugehörigem Zeitstempel, etc., bei und in industriellen Maschinen eingesetzt bzw. verwendet werden können, wie z.B. in Verpackungsmaschinen, Pressen, Kunststoffspritzmaschinen, Textilmaschinen, Druckmaschinen, Werkzeugmaschinen, Robotor, Handlingssystemen, Holzverarbeitungsmaschinen, Glasverarbeitungsmaschinen, Keramikverarbeitungsmaschinen sowie Hebezeugen.

Im folgenden wird die Erfindung anhand der in den Figuren dargestellten Ausführungsbeispielen näher beschrieben und erläutert.

Es zeigen:
- FIG 1: eine schematische Darstellung eines Ausführungsbei- spiels für ein synchrones, getaktetes Kommunikati- onssystem mit Relativuhr,
- FIG 2: die prinzipielle Arbeitsweise in einem synchronen, getakteten Kommunikationssystem mit Relativuhr im Bereich verteilter Automatisierungssysteme unter Verwendung eines Stempels.

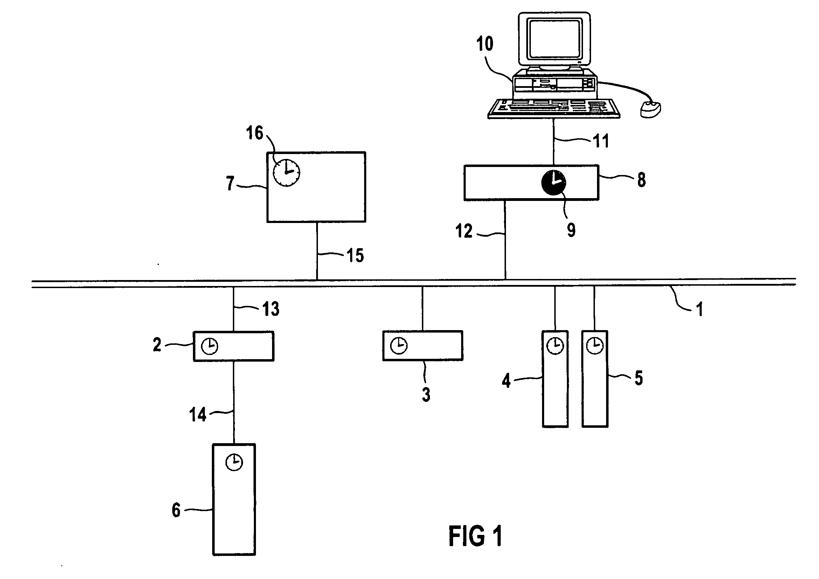

FIG 1 zeigt eine schematische Darstellung eines Ausführungsbeispiels für ein synchrones, getaktetes Kommunikationssystem mit Relativuhr. Bei dem dargestellten Kommunikationssystem handelt es sich dabei gleichzeitig um ein verteiltes Automatisierungssystem. Diese beiden Begriffe werden im folgenden synonym verwendet. Das gezeigte Ausführungsbeispiel besteht aus mehreren Teilnehmern, die gleichzeitig sowohl als Sender als auch als Empfänger ausgeprägt sein können, also sowohl Signale oder Daten senden als auch empfangen können. Alle Teilnehmer sind mittelbar oder unmittelbar an das Datennetz 1, beispielsweise ein Bussystem mit und/oder ohne Echtzeiteigenschaften, wie Taktsynchronisation und Äquidistanz, wie z.B. Ethernet, Industrial Ethernet, Feldbus, Profibus, FireWire oder auch PC-interne Bussysteme (PCI), etc., aber auch getaktete Datennetze, wie beispielsweise Isochrones Realtime Ethernet, über Datenleitungen, von denen aus Gründen der übersichtlichen Darstellung nur die Datenleitungen 11, 12, 13, 14, 15 dargestellt werden, angeschlossen. Die Datenleitungen sind dabei je nach Verwendungszweck so ausgeprägt, dass sie sowohl Daten als auch Signale oder andere elektrische Impulse übertragen bzw. leiten können. Insbesondere können auch Datenleitungen verschiedenen Typs in diesem verteilten Automatisierungssystem eingesetzt werden, die jeweils Daten in unterschiedlichem Datenformat übertragen. So kann beispielsweise über die Datenleitung 14 Daten in einem anderen Format gesendet werden als beispielsweise über die Datenleitung 13. Für eine entsprechende Konvertierung sorgt in diesem Fall beispielsweise die dezentrale Ein-/Ausgabe-Baugruppe 2. Selbstverständlich ist es aber auch möglich, dass die Datenleitungen 13 und 14 Daten im selben Format übertragen. In diesem Fall ist eine echte Datenkonvertierung durch die dezentrale Ein-/Ausgabe-Baugruppe 2 nicht notwendig, sondern es erfolgt eine Weiterleitung der Daten in unveränderter Form, was einem sogenannten Durchschalten der Daten entspricht. Davon unbetroffen ist die Möglichkeit, dass die dezentrale Ein-/Ausgabe-Baugruppe 2 die Daten in beliebiger Art und Weise bearbeitet und/oder verarbeitet, insbesondere den Daten einen Zeitstempel oder ähnliches hinzufügt, ohne das Datenformat selbst zu verändern und/oder es in ein anderes Format zu konvertieren, falls dies für einen ordnungsgemäßes Funktionieren des Automatisierungssystem notwendig ist. Direkt an das Datennetz 1 angeschlossenen Datenleitungen, wie beispielsweise die Datenleitungen 12, 13 und 15 übertragen Daten im selben Datenformat wie das Datennetz 1 selbst. Das verwendete Datennetz 1 arbeitet getaktet und der Austausch von Daten über das Datennetz 1 erfolgt synchron im verwendeten Kommunikationstakt. Eine erstmalige Synchronisierung aller angeschlossenen Teilnehmer auf den verwendeten Takt erfolgt beispielsweise beim Hochfahren des Systems. Um den taktsynchronen Datenaustausch zu gewährleisten, erfolgt eine permanente Resynchronisation der Teilnehmer während des laufenden Betriebs. Selbstverständlich ist es aber auch möglich, dass Teilnehmer, die im laufenden Betrieb an das Datennetz 1 angeschlossen werden, sich auf den verwendeten Kommunikationstakt synchronisieren können. Besonders vorteilhaft ist die Möglichkeit den zu verwendenden Kommunikationstakt je nach Bedarf und/oder Anwendung zumindest beim Hochfahren des Systems einmal einstellen zu können. Dabei hat es sich erfahrungsgemäss als besonders vorteilhaft herausgestellt, wenn die Dauer eines Kommunikationstakts zwischen 10µs und 10ms beträgt. In diesem Ausführungsbeispiel sind als Teilnehmer zu steuernde Geräte, beispielsweise Antriebe 4, 5 und 6 sowie dezentrale Ein-/Ausgabe-Baugruppen 2, 3, ein Projektierungsgerät 7, eine Kontrolleinheit 8, die sowohl als Taktschläger für den Kommunikationstakt als auch als Master der Relativuhr 9 ausgeprägt und mit entsprechenden Mitteln ausgestattet ist, und ein Bediengerät 10, das hier beispielsweise als Rechner mit Tastatur und Maus ausgeprägt ist, dargestellt. Selbstverständlich sind als Teilnehmer jedwede andere Art von Automatisierungskomponenten bzw. Geräten denkbar. Auch Anzahl und/oder Lokalisierung der betreffenden Teilnehmer sind hier nur beispielhaft angegeben. Alle dargestellten Teilnehmer sind bereits auf die von der Relativuhr 9 vorgegebene Relativzeit 16 synchronisiert. Aus Gründen der Übersichtlichkeit ist die Relativzeit 16 nur beim Projektierungsgerät 7 bezeichnet worden. Im offenbarten Ausführungsbeispiel kann ein Ereignis an einem zu steuernden Gerät, beispielsweise eine Istwerterfassung am beispielsweise analogen Antrieb 6 über einen, in diesen integrierten, der Übersichtlichkeit wegen nicht dargestellten Sensor und/oder Aktor vorgenommen werden, diese Istwerte mittels der Datenleitung 14 an die dezentrale Ein-/Ausgabe-Baugruppe 2 übergeben, dort taktsynchron erfasst und in ein entsprechendes für das Datennetz 1 kompatibles Datenformat umgewandelt werden. Die auf diese Weise konvertierten Daten werden dann synchron zum verwendeten Kommunikationstakt des Kommunikationssystems über die Datenleitung 13, das Datennetz 1, beispielsweise ein Ethernet-Bussystem, und die Datenleitung 12 an die Kontrolleinheit 8 weitergeleitet. Die Kontrolleinheit 8 ist beispielsweise als eine speicherprogrammierbare Steuerung (SPS) oder eine sonstige beliebige Steuerungs- bzw. Regelungseinheit ausgeprägt, die Daten, beispielsweise Istwerte, von allen an das Datennetz 1 angeschlossenen Teilnehmern empfangen und auswerten, und/oder Daten, beispielsweise Sollwerte an alle Teilnehmer senden kann. So verarbeitet die Kontrolleinheit 8 beispielsweise die von der dezentralen Ein-/Ausgabe-Baugruppe 2 taktsynchron gesendeten Istwerte des Antriebs 6, berechnet auf Basis dieser Istwerte entsprechende Sollwerte und sendet diese Sollwerte ebenfalls taktsynchron über die Datenleitung 12, das Datennetz 1 und die Datenleitung 13 an die dezentrale Ein-/Ausgabe-Baugruppe 2 zurück. Diese wandelt die empfangenen Sollwerte in für den Antrieb 6 interpretierbare Signale um und leitet sie über die Datenleitung 14 synchron zum verwendeten Kommunikationstakt an den Antrieb 6 weiter, der die empfangenen Sollwerte mittels eines, der Übersichtlichkeit wegen nicht dargestellten, integrierten Aktors, beispielsweise als Steuerbefehle interpretiert und umsetzt. Derselbe Mechanismus kann analog auf einen, der Übersichtlichkeit wegen nicht dargestellten Prozess übertragen werden, der beispielsweise an die dezentrale Ein-/Ausgabe-Baugruppe 3 angeschlossen ist.

Mittels eines Bediengeräts 10 über die Datenleitung 11 kann beispielsweise auch manuell auf die Kontrolleinheit 8 zugegriffen werden und dadurch auf die entsprechenden Regelungs- und Steuerungsmechanismen der Kontrolleinheit 8 Einfluss genommen werden. Das Projektierungsgerät 7 und die Kontrolleinheit 8 sind dabei als Master-Geräte ausgeprägt, da sie unmittelbaren Einfluss auf die Steuerung des Kommunikationssystems und der anderen angeschlossenen Teilnehmer ausüben können. Analog werden dabei die anderen Teilnehmer, beispielsweise Antriebe 4, 5 und 6 sowie die dezentralen Ein-/Ausgabe-Baugruppen 2 und 3 als Slave-Geräte bezeichnet, da sie entsprechend von den Master-Geräten 7 und 8 ausgesteuert werden. Es ist dabei ohne weiteres möglich, wie aus dem Ausführungsbeispiel ersichtlich ist, dass auch Automatisierungskomponenten wie beispielsweise die Antriebe 4 und 5 ohne eine zwischengeschaltete dezentrale Ein-/Ausgabe-Baugruppe direkt an das Datennetz 1 angeschlossen werden können. Aus Gründen der übersichtlichen Darstellung wurde darauf verzichtet, den Anschluss weiterer zu steuernder Geräte an die dezentrale Ein-/Ausgabe-Baugruppe 3 darzustellen. Auch die dargestellten Antriebe 4, 5 und 6 sind beispielhaft für beliebige Automatisierungskomponenten, insbesondere Feldgeräte, zu steuernde Geräte oder Maschinen, zu sehen.

Das dargestellte Ausführungsbeispiel weist darüber hinaus eine Kontrolleinheit 8 auf, die unter anderem als Taktschläger für den verwendeten Kommunikations-/Synchronisationstakt und als Master der Relativuhr 9 ausgeprägt ist. Die in die Kontrolleinheit 8 integrierte Relativuhr 9 kann dabei beispielsweise hardware- oder softwaremäßig realisiert sein. Die Relativuhr 9 gibt eine systemweit gültige, eindeutige Relativzeit 16 vor, die sich aus zwei Teilen zusammensetzt, wobei der erste Teil den aktuellen Kommunikationszyklus charakterisiert und der zweite Teil den Zeitpunkt innerhalb des aktuellen Kommunikationszyklus bestimmt. Dadurch ist jeder beliebige Kommunikationszyklus und darüber hinaus jeder Zeitpunkt innerhalb eines beliebigen Kommunikationszyklusses exakt bestimmbar ist, wodurch die zeitliche Genauigkeit beim Erfassen und Registrieren bzw. beim Schalten von Ereignissen oder bei beliebigen Steuer- und Regelungsvorgängen außerordentlich verbessert wird. Die Genauigkeit der Relativuhr 9 kann von der Kontrolleinheit 8 je nach Anwendung in einem Bereich zwischen der Dauer eines Kommunikationszyklus und 1µs eingestellt werden. Die Relativzeit 16 kann durch eine digitalisierte Zahl oder eine absolute Zeiteinheit, die sich aus der Dauer des Kommunikationstakts ableitet, dargestellt werden.

Bei dem gezeigten taktsynchronen Kommunikationssystem wird allen Teilnehmern der Beginn jedes neuen Kommunikationszyklus beispielsweise durch die Übertragung eines speziellen Datenpakets, wie z.B. einem sogenannten global control-Datenpaket, unmittelbar angezeigt. Zusammen mit der Information über die Länge eines Kommunikationstakts, die wenigstens beim Hochfahren des Systems festgelegt und an alle Teilnehmer verteilt wird, können sich alle Teilnehmer auf den verwendeten Takt synchronisieren. Diese Informationen werden dabei von der Kontrolleinheit 8 als Taktschläger an alle Teilnehmer des Kommunikationssystems übermittelt. Dieser Übertragungsmechanismus wird von der Kontrolleinheit 8 ebenfalls benutzt, um die aktuelle Relativzeit 16 der Relativuhr 9 an alle angeschlossenen Teilnehmer zu verteilen. Diese systemweit geltende, eindeutige Relativuhr 9 und damit die Relativzeit 16 bleibt deshalb bis zum Herunterfahren des Systems für alle Teilnehmer gültig. Die Kontrolleinheit 8 sorgt darüber hinaus permanent dafür, dass alle Teilnehmer bis zum Herunterfahren des Systems auf diese Relativuhr 9 und damit die Relativzeit 16 synchronisiert bleiben. Dadurch wird gewährleistet, dass für alle Teilnehmer während der Laufzeit des Systems stets die selbe Relativzeit 16 gilt, wodurch insbesondere die Gleichzeitigkeit von Ereignissen im Rahmen der vorgegebenen zeitlichen Auflösung der Relativzeit 16 gewährleistet ist. Dadurch wird der Einfluss von teilnehmerspezifischen Totzeiten erheblich reduziert.

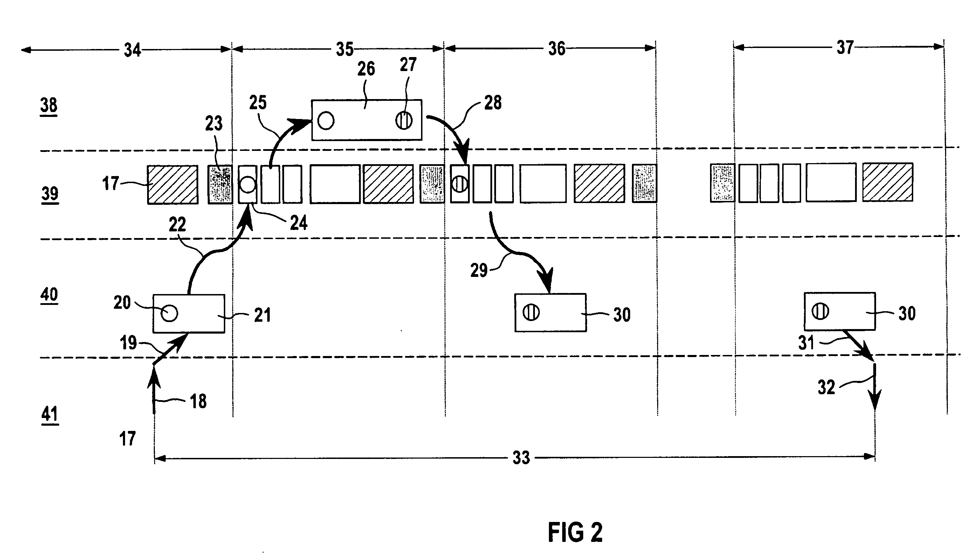

In FIG 2 ist die prinzipielle Arbeitsweise in einem synchronen, getakteten Kommunikationssystem mit Relativuhr im Bereich verteilter Automatisierungssysteme unter Verwendung eines Stempels dargestellt. Zur Verdeutlichung sind beispielhaft drei aufeinanderfolgende Kommunikationszyklen, Kommunikationszyklus m 34, Kommunikationszyklus m+1 35 und Kommunikationszyklus m+2 36 sowie ein weiterer, zu einem späteren Zeitpunkt auftretender, aber nicht unmittelbar anschließender Kommunikationszyklus m+x 37 dargestellt. Weiterhin ist die prinzipielle Arbeitsweise zwischen Eintritt eines Eingangsereignisses 18 und dem entsprechenden Ausgabeereignis 32 in vier Ebenen unterteilt, nämlich in eine Kontrolleinheitenebene 38, eine Datennetzebene 39, eine Automatisierungskomponentenebene 40 und eine Prozessschnittstellenebene 41. Als zur Kontrolleinheitenebene 38 zugehörige Teilnehmer sind Master-Geräte, wie z.B. Kontrolleinheit 8 zu nennen, während zur Automatisierungskomponentenebene 40 Automatisierungskomponenten, wie beispielsweise die dezentralen Ein-/Ausgabe-Baugruppen 2, 3, die digitalen Antriebe 4, 5, 6 oder sonstige Feld- und/oder Peripheriegeräte, gehören. Die Datennetzebene 39 kennzeichnet die Verbindung zwischen den beiden genannten Ebenen 38 und 40 durch das Datennetz 1 und die Prozessschnittstellenebene 41 kennzeichnet den Durchgriff der auf der Ebene 40 befindlichen Automatisierungskomponenten auf die darunter liegenden Prozesse und/oder Prozesskomponenten. So handelt es sich beim Eingangsereignis 18 bei Antrieben beispielsweise um die Erfassung von Geberistwerten, bei dezentralen Ein-/Ausgabebaugruppen um die Erfassung z.B. von Istwerten der nachfolgend angeschlossenen Sensorik. Beim Ausgabeereignis 32 handelt es sich bei Antrieben z.B. um die Sollwertausgabe an die entsprechenden angeschlossenen Leistungsteile, bei den dezentralen Ein-/Ausgabe-Baugruppen z.B. um die Sollwertausgabe an die entsprechende angeschlossene Aktorik.

Die dargestellte Arbeitsweise kennzeichnet den eingeschwungenen Zustand des gezeigten Kommunikationssystems, d.h. alle Teilnehmer, insbesondere die Geräte auf der Automatisierungskomponentenebene 40, beispielsweise die dezentralen Ein-/Ausgabe-Baugruppen 2 und 3, sind sowohl auf den Kommunikationstakt des Datennetzes 1, als auch auf die systemweit geltende Relativuhr 9 und damit auf die Relativzeit 16 synchronisiert. Die Synchronisierung der Teilnehmer auf den verwendeten Kommunikationstakt sowie auf die Relativuhr 9 erfolgt bereits beim Hochfahren des Systems.

Den einzelnen Teilnehmern des Kommunikationssystems, insbesondere den dezentralen Ein-/Ausgabe-Baugruppen 2 und 3, ist deshalb die Länge eines Kommunikationszyklus und damit insbesondere die Länge der Kommunikationszyklen m 34, m+1 35, m+2 36 sowie m+x 37 bekannt. Die Synchronisierung der Teilnehmer auf den verwendeten Kommunikationstakt erfolgt durch das sogenannte global control-Datenpaket 23, das jeweils den Anfang des nächsten Kommunikationszyklus unmittelbar anzeigt und deshalb rechtzeitig an alle Teilnehmer gesendet wird. Dieses Datenpaket 23 wird beim Hochfahren des Systems von den Teilnehmern ausgewertet, wodurch sich diese auf den Kommunikationstakt des Kommunikationssystems aufsynchronisieren können. Um eine Überschneidung bei der Datenübertragung von einem Kommunikationszyklus in den folgenden zu verhindern und ein präzises Auswerten des Datenpakets 23 und somit die zweifelsfreie Signalisierung des jeweiligen Beginns des unmittelbar anschließenden Kommunikationszyklus zu gewährleisten, werden unmittelbar vor dem Senden des global control-Datenpakets 23 für eine diskrete Zeit keine Daten gesendet. Dies wird als aktives Warten bezeichnet, angedeutet durch die Reserve 17. Aus Gründen der Übersichtlichkeit ist die Reserve 17 nur einmal bezeichnet. Während des laufenden Betriebs zeigt das global control-Datenpaket 23 selbstverständlich immer unmittelbar den Anfang des nächsten Kommunikationszyklus an und ist damit den Teilnehmern des Kommunikationssystems bekannt.

Auf Basis des in FIG 1 offenbarten Mechanismus der Verwendung einer systemweit geltenden Relativuhr 9 wird beispielsweise von der dezentralen Ein-/Ausgabe-Baugruppe 2 unter Verwendung der Relativzeit 16 ein Stempel 20 generiert, der aus der zu einem Eingangsereignis 18 zugehörigen aktuellen Relativzeit 16 und der Art des Eingangsereignisses 18 selbst, beispielsweise positive oder negative Schaltflanke, besteht. Der erste Teil der Relativzeit 9 kennzeichnet dabei den aktuellen Kommunikationszyklus, beispielsweise den Kommunikationszyklus m 34, in dem die dezentrale Ein-/Ausgabe-Baugruppe 2 die Signalerfassung 19 eines Eingangsereignisses 18 eines zu steuernden Geräts an ihrem Eingang durchführt und der zweite Teil präzisiert den Zeitpunkt der Signalerfassung 19 relativ zum Anfang oder zum Ende innerhalb des aktuellen Kommunikationszyklus, beispielsweise des Kommunikationszyklus m 34. Dieser so generierte Stempel 18 wird auf der Automatisierungskomponentenebene 40, beispielsweise von der dezentralen Ein-/Ausgabe-Baugruppe 2 bei der Signalerfassung 19 des Eingangsereignisses 18 oder der Signalkonvertierung 21 den Daten hinzugefügt, sodass der Erfassungszeitpunkt und Art des Schaltereignisses dieser Daten in der dezentralen Ein-/Ausgabe-Baugruppe 2 exakt protokolliert und beim Weiterleiten Bestandteil der Daten ist. Der Stempel 20 ist aus Gründen der Übersichtlichkeit nur einmal bezeichnet. Die Datenweiterleitung 22 auf der Datennetzebene 39, durch das Datenpaket 24 angedeutet, wird anschließend beispielsweise mit Beginn des nächsten Kommunikationszyklus m+1 35 fortgesetzt. Der unmittelbare Anfang des nächsten Kommunikationszyklus m+1 35 wird dabei durch Übertragung des global control-Datenpakets 23 allen Teilnehmern mitgeteilt. Aus Gründen der übersichtlichen Darstellung ist auf der Datennetzebene 39 das Datenpaket 24, das grau markierte global control-Datenpaket 23 sowie die Reserve 23 jeweils nur einmal bezeichnet worden. Die unterschiedliche Länge der nicht bezeichneten Datenpakete hat dabei keine besondere Bedeutung, es verdeutlicht nur, dass die Länge der einzelnen Datenpakete inhaltsabhängig und damit variabel ist. Innerhalb des Kommunikationszyklus m+1 35 erfolgt nun die Datenübergabe 25 der weitergeleiteten Daten mit Stempel 20 von der Datennetzebene 39 an die Kontrolleinheitenebene 38 beispielsweise an die Kontrolleinheit 8, von der die Datenverarbeitung 26 durchgeführt wird. Dabei wird von der Kontrolleinheit 8 sowohl der Stempel 20 als auch der Inhalt der Daten ausgewertet. Darauf basierend berechnet die Kontrolleinheit 8 Antwortdaten und in Abhängigkeit des Inhalts des Stempels 20 den erforderlichen Zeitpunkt für die zukünftige Ausgabe der Antwortdaten an das entsprechende zu steuernde Gerät am Ausgang beispielsweise der dezentralen Ein-/Ausgabe-Baugruppe 2, und die Art des Ausgabeereignisses, beispielsweise positive oder negative Schaltflanke, etc., mit der geschaltet werden soll. Die berechneten Antwortdaten, die für das zu steuernde Gerät bestimmt sind, werden vor der Übertragung an die dezentrale Ein-/Ausgabe-Baugruppe von der Kontrolleinheit 8 mit einem Stempel 27, der aus der berechneten Relativzeit, bezogen auf den erforderlichen, geplanten Zeitpunkt der Signalausgabe und dem Ausgabe-Schaltereignis besteht, versehen, sodass der Stempel 27 beim Weiterleiten Bestandteil der Antwortdaten ist. Dabei besteht der Teil des Stempels 27, der die Relativzeit charakterisiert wiederum aus zwei Teilen. Der eine Teil kennzeichnet dabei den Kommunikationszyklus, beispielsweise den Kommunikationszyklus m+x 37, in dem die dezentrale Ein-/Ausgabe-Baugruppe 2 die Signalausgabe 31 eines Ausgangsereignisses 32 an ein zu steuerndes Gerät an ihrem Ausgang durchführen soll und der andere Teil präzisiert den Ausgabezeitpunkt der Signalausgabe 31 innerhalb dieses so bestimmten Kommunikationszyklus, beispielsweise des Kommunikationszyklus m+x 37. Der Stempel 27 ist aus Gründen der Übersichtlichkeit nur einmal bezeichnet. Von der Kontrolleinheitenebene 38 aus, beispielsweise von der Kontolleinheit 8, erfolgt die Datenübergabe 28 der berechneten Antwortdaten mit dem Stempel 27 beispielsweise zum Beginn des nächsten Kommunikationszyklus m+2 36 an die Datennetzebene 39. Auch diese Datenübergabe 28 erfolgt synchron zum Kommunikationstakt und kann in jedem Kommunikationszyklus durchgeführt werden. Von der Datennetzebene 39 erfolgt eine Datenübermittlung 29 beispielsweise noch innerhalb des Kommunikationszyklus m+2 36 an die Automatisierungskomponentenebene 40, beispielsweise an die dezentrale Ein-/Ausgabe-Baugruppe 2, die den Stempel 27, mit dem die empfangenen Daten versehen sind, auswertet. Je nach Ergebnis der Auswertung des Stempels 27, insbesondere des Teils, der den Zeitpunkt der Ausgabe der Daten bezeichnet, werden die Daten von der dezentralen Ein-/Ausgabe-Baugruppe 2 zwischengespeichert und erst bei Eintritt der entsprechenden Relativzeit 16, beispielsweise im Kommunikationszyklus m+x 37 erfolgt die entsprechende Signalausgabe 31 zum vorgesehenen Zeitpunkt, beispielsweise Schaltung von Sollwerten am Ausgang der dezentralen Ein-/Ausgabe-Baugruppe 2 mit dem im Stempel 27 vorgesehenen Schaltereignis, an das zu steuernde Gerät mit dem Ausgabeereignis 32. Die vorher notwendige Datenkonvertierung 30 der erhaltenen Daten in für das zu steuernde Gerät interpretierbare Signale, kann dabei zu einem beliebigen Zeitpunkt zwischen Datenübermittlung 29 im Kommunikationszyklus m+2 36 und der Signalausgabe 31 im Kommunikationszyklus m+x 37 von der dezentralen Ein-/Ausgabe-Baugruppe 2 durchgeführt werden.

Somit kann abhängig vom Zeitpunkt der Registrierung eines Eintrittsereignisses 18 am Eingang einer dezentralen Ein-/Ausgabe-Baugruppe das Schalten eines Ausgabeereignisses 32 am Ausgang der dezentralen Ein-/Ausgabe-Baugruppe durch Verwendung einer systemweit geltenden Relativuhr 9 exakt geplant und mit einer ausserordentlichen zeitlichen Präzision durchgeführt werden, was im Bereich Antriebstechnik in verteilten Automatisierungssystemen, beispielsweise für das Schalten von Nocken, etc. außerordentlich vorteilhaft ist. Der zeitliche Abstand 33 zwischen Eingangsereignis 18 und Ausgabeereignis 32 ist also für jede beliebige Situation im geschilderten Anwendungsbereich individuell mit jeweils der selben hohen zeitlichen Genauigkeit einstellbar und erreichbar, wodurch die Abhängigkeit von Totzeiten von betroffenen Teilnehmern des Kommmunikationssystems sehr stark reduziert wird. Darüber hinaus können dadurch applikative Ereignissequenzen realisiert werden, die insbesondere bei Holzbearbeitungsmaschinen beispielsweise bei der Herstellung von Möbelbrettern von herausragender Bedeutung sind. Hier müssen beispielsweise abhängig von der Erfassung von Holzvorder- oder Rückkanten Aggregate für das Aufbringen oder Abschneiden von Umleimern mit hoher zeitlicher Präzision geschaltet werden.

Zusammenfassend betrifft die Erfindung ein synchrones, getaktetes Kommunikationssystem, beispielsweise ein verteiltes Automatisierungssystem, dessen Teilnehmer, beliebige Automatisierungskomponenten sein können, und die über ein Datennetz 1 zwecks gegenseitigen Datenaustauschs miteinander gekoppelt sind. Als Datennetz 1 des Kommunikationssystems sind dabei alle möglichen Bussysteme wie z.B. Feldbus, Profibus, Ethernet, Industrial Ethernet, etc. denkbar. Ein Teilnehmer dieses Kommunikationssystems ist als Taktschläger ausgezeichnet und sorgt für die Verteilung und Einhaltung des verwendeten Kommunikationstakts an alle Teilnehmer und von allen Teilnehmern. Über denselben Mechanismus kann der Taktschläger auch eine Relativuhr 9 im ganzen Kommunikationssystem bei allen Teilnehmern einführen. Dieser Teilnehmer ist damit ebenfalls Master über die Relativuhr 9 bzw. die geltende Relativzeit 16. Alle Teilnehmer des Kommunikationssystems sind daher permanent auf die systemweit geltende Relativuhr 9 mit der gültigen Relativzeit 16 synchronisiert und haben deshalb zu jeder Zeit dasselbe Zeitverständnis. Die Realisierung von applikativen Sequenzen, Synchronisierung von gleichzeitig eintretenden Ereignissen, zeitliche Genauigkeit bei der Erfassung von Ereignissen bzw. Schalten von Ausgängen wird dadurch deutlich verbessert bzw. erst ermöglicht.

## Patentansprüche

1. Verfahren zum Aufbau eines synchronen, getakteten Kommunikationssystems mit Äquidistanzeigenschaften im Bereich industrieller Anlagen zwischen wenigstens zwei Teilnehmern, insbesondere Automatisierungskomponenten, und wenigstens einem Datennetz (1),
**dadurch gekennzeichnet,**
**dass** insbesondere beim Hochfahren des Systems eine systemweit geltende, eindeutige Relativuhr (9) eingeführt wird und alle an das Datennetz (1) angeschlossenen Teilnehmer wenigstens einmal auf die, durch die Relativuhr (9) bestimmte Relativzeit (16) synchronisiert werden, wobei die Relativzeit (16) über das Datennetz (1) an alle Teilnehmer übertragen wird.

2. Verfahren nach Anspruch 1
**dadurch gekennzeichnet,**
**dass** als Teilnehmer des Kommunikationssystems wenigstens eine Kontrolleinheit (8), wenigstens eine zu steuernde Einheit, und wenigstens eine dezentrale Ein-/Ausgabe-Baugruppe (2, 3), die als Schnittstelle zwischen dem Datennetz (1) und der zu steuernden Einheit bidirektional den Austausch von Signalen zwischen der zu steuernden Einheit und der Kontrolleinheit (8) mittels des Datennetzes (1) vornimmt, an das Datennetz (1) angeschlossen sind.

3. Verfahren nach Anspruch 1 oder 2,
**dadurch gekennzeichnet,**
**dass** die durch die Relativuhr (9) systemweit eingeführte, eindeutige Relativzeit (16) sich aus zwei Teilen zusammensetzt, wobei der erste Teil den aktuellen Kommunikationszyklus charakterisiert und der zweite Teil den Zeitpunkt innerhalb des aktuellen Kommunikationszyklus des Kommunikationssystems bestimmt.

4. Verfahren nach einem der vorstehenden Ansprüche,
**dadurch gekennzeichnet,**
**dass** der Kommunikationszyklus durch eine digitalisierte Zahl oder eine absolute Zeiteinheit, die sich aus der Dauer des Kommunikationszyklus ableitet, dargestellt wird.

5. Verfahren nach einem der vorstehenden Ansprüche,
**dadurch gekennzeichnet,**
**dass** die Genauigkeit der Relativuhr (9) in einem Bereich zwischen der Dauer eines Kommunikationstakts und 1µs einstellbar ist.

6. Verfahren nach einem der vorstehenden Ansprüche,
**dadurch gekennzeichnet,**
**dass** die systemweit geltende, eindeutige Relativuhr (9) und damit die Relativzeit (16) bis zum Herunterfahren des Systems für alle Teilnehmer gültig bleibt.

7. Verfahren nach einem der vorstehenden Ansprüche,
**dadurch gekennzeichnet,**
**dass** alle Teilnehmer bis zum Herunterfahren des Systems auf die systemweit geltende, eindeutige Relativuhr (9) und damit die Relativzeit (16) synchronisiert bleiben.

8. Verfahren nach einem der vorstehenden Ansprüche
**dadurch gekennzeichnet,**
**dass** die Dauer des Kommunikationstakts einstellbar ist.

9. Verfahren nach Anspruch 8,
**dadurch gekennzeichnet,**
**dass** die Dauer eines Kommunikationstakts zwischen 10µs und 10ms beträgt.

10. Verfahren nach einem der vorstehenden Ansprüche,
**dadurch gekennzeichnet,**
**dass** die Dauer eines Kommunikationstakts wenigstens einmal beim Hochfahren des Systems festgelegt wird.

11. Verfahren nach einem der vorstehenden Ansprüche,
**dadurch gekennzeichnet,**
**dass** Signale eines zu steuernden Geräts bei deren Registrierung und Erfassung am Eingang einer dezentralen Ein-/Ausgabe-Baugruppe (2, 3) von der Ein-/Ausgabe-Baugruppe (2, 3) mit einem Stempel (20) versehen werden, der sich aus der zu diesem Zeitpunkt aktuellen Relativzeit (16) und dem Erfassungs-Schaltereignis zusammensetzt, in ein für das Datennetz (1) kompatibles Datenformat umgewandelt, die Daten mit diesem Stempel (20) über das Datennetz (1) an die Kontrolleinheit (8) weitergeleitet, dort ausgewertet und verarbeitet werden, wobei die Relativzeit (16) als Teil des Stempels (20) aus zwei Teilen besteht, wobei der eine Teil den Kommunikationszyklus des Kommunikationssystems bestimmt, in welchem die Registrierung und Signalerfassung erfolgt ist und der andere Teil den Zeitpunkt relativ zum Anfang oder zum Ende des Kommunikationszyklus des Kommunikationssystems bestimmt, in welchem die Registrierung und Signalerfassung erfolgt ist.

12. Verfahren nach einem der vorstehenden Ansprüche,
**dadurch gekennzeichnet,**
**dass** Daten, die für das zu steuernde Gerät bestimmt sind, vor der Übertragung an die dezentrale Ein-/Ausgabe-Baugruppe (2, 3) von der Kontrolleinheit (8) mit einem Stempel (27) versehen werden, der sich aus einer Relativzeit (16), bezogen auf den Zeitpunkt der geplanten Signalausgabe und einem Ausgabe-Schaltereignis zusammensetzt, und die Daten mit diesem Stempel (27) über das Datennetz (1) an die Ein-/Ausgabe-Baugruppe (2, 3) übertragen werden, wobei die Relativzeit (16) als Teil des Stempels (27) aus zwei Teilen besteht, wobei der eine Teil den Kommunikationszyklus des Kommunikationssystems bestimmt in dem die Signalausgabe erfolgen soll und der andere Teil den Zeitpunkt relativ zum Anfang oder zum Ende des Kommunikationszyklus des Kommunikationssystems bestimmt, in welchem die Signalausgabe erfolgen soll.

13. Verfahren nach einem der vorstehenden Ansprüche,
**dadurch gekennzeichnet,**
**dass** Daten, die mit einem Stempel (27), der sich auf die geplante Signalausgabe bezieht, versehen und für das zu steuernde Gerät bestimmt sind, von der dezentralen Ein-/Ausgabe-Baugruppe (2, 3) in für das zu steuernde Gerät interpretierbare Signale umgewandelt und zu dem Zeitpunkt, der durch den übertragenen Stempel vorgegeben ist, am Ausgang der dezentralen Ein-/Ausgabe-Baugruppe (2, 3) gemäss des vorgegebenen Schaltereignisses geschaltet und an das zu steuernde Gerät ausgegeben werden.

14. Verfahren nach einem der vorstehenden Ansprüche,
**dadurch gekennzeichnet,**
**dass** die Schaltung und Weiterleitung von Signalen an ein zu steuerndes Gerät am Ausgang einer dezentralen Ein-/Ausgabe-Baugruppe (2, 3) in zeitlich einstellbarer, definierter Abhängigkeit relativ zum Zeitpunkt der Registrierung und Erfassung von Signalen eines zu steuernden Geräts am Eingang einer dezentralen Ein-/Ausgabe-Baugruppe (2, 3) erfolgt.

15. Verfahren nach einem der vorstehenden Ansprüche,
**dadurch gekennzeichnet,**
**dass** Daten die von einem oder mehreren Teilnehmern des Kommunikationssystems bis zum Herunterfahren des Systems gespeichert werden, zusammen mit der jeweils aktuellen Relativzeit (16) des Systems gespeichert werden und die gemeinsame Auswertung und/oder Darstellung der so aufgezeichneten Daten auf Basis der jeweils gespeicherten Relativzeit (16) des Systems erfolgt.

16. Verfahren nach einem der vorstehenden Ansprüche,
**dadurch gekennzeichnet,**
**dass** ein oder mehrere Teilnehmer des Kommunikationssystems, insbesondere Automatisierungskomponenten, die die Relativuhr (9) unterstützen, Kenndaten zur Verfügung stellen, die von wenigstens einer Kontrolleinheit (8) über das Datennetz (1) abgerufen und ausgewertet werden können, wobei die Kenndaten wenigstens den Support der Relativuhr (9), und/oder die mögliche einstellbare Genauigkeit und/oder wenigstens eine Einstellmöglichkeit der Relativuhr (9) und/oder den Support wenigstens eines Mechanismus, der sich aus dem Einsatz einer Relativuhr (9) in einem Kommunikationssystem ableitet, enthalten.

17. Verfahren nach einem der vorstehenden Ansprüche,
**dadurch gekennzeichnet,**
**dass** ein oder mehrere Teilnehmer des Kommunikationssystems, insbesondere Automatisierungskomponenten, die Erfassung von Ereignissen basierend auf der Relativuhr (9) nur in bestimmten Arbeitsphasen und/oder zu bestimmten Zeitpunkten durchführen können.

18. Synchrones, getaktetes Kommunikationssystem mit Äquidistanzeigenschaften im Bereich industrieller Anlagen zwischen wenigstens zwei Teilnehmern, insbesondere Automatisierungskomponenten und wenigstens einem Datennetz (1),
**dadurch gekennzeichnet,**
**dass** das Kommunikationssystem zumindest ein Mittel aufweist, das insbesondere beim Hochfahren des Systems eine systemweit geltende, eindeutige Relativuhr (9) einführt und alle oder eine Untermenge der angeschlossenen Teilnehmer wenigstens einmal auf die, durch die Relativuhr (9) bestimmte Relativzeit (16) synchronisiert, wobei die Relativzeit (16) über das Datennetz (1) an alle Teilnehmer übertragen wird.

19. Kommunikationssystem nach Anspruch 18,
**dadurch gekennzeichnet,**
**dass** das Kommunikationssystem als Teilnehmer wenigstens eine Kontrolleinheit (8), wenigstens ein zu steuerndes Gerät und wenigstens eine dezentrale Ein-/Ausgabe-Baugruppe (2, 3), die als Schnittstelle zwischen dem Datennetz (1) und dem zu steuernden Gerät bidirektional den Austausch von Signalen zwischen dem zu steuernden Gerät und der Kontrolleinheit (8) mittels des Datennetzes (1) vornimmt, aufweist.

20. Kommunikationssystem nach Anspruch 18 oder 19,
**dadurch gekennzeichnet,**
**dass** das Kommunikationssystem zumindest ein Mittel aufweist, das dafür sorgt, dass die durch die Relativuhr (9) systemweit eingeführte, eindeutige Relativzeit (16) sich aus zwei Teilen zusammensetzt, wobei der erste Teil den aktuellen Kommunikationszyklus charakterisiert und der zweite Teil den Zeitpunkt innerhalb des aktuellen Kommunikationszyklus des Kommunikationssystems bestimmt.

21. Kommunikationssystem nach einem der Ansprüche 18 bis 20,
**dadurch gekennzeichnet,**
**dass** das Kommunikationssystem zumindest ein Mittel aufweist, das dafür sorgt, dass der Kommunikationszyklus durch eine digitalisierte Zahl oder eine absolute Zeiteinheit, die sich aus der Dauer des Kommunikationszyklus ableitet, dargestellt wird.

22. Kommunikationssystem nach einem der Ansprüche 18 bis 21,
**dadurch gekennzeichnet,**
**dass** das Kommunikationssystem zumindest ein Mittel aufweist, das dafür sorgt, dass die Genauigkeit der Relativuhr (9) in einem Bereich zwischen der Dauer eines Kommunikationstakts und 1µs eingestellt wird.

23. Kommunikationssystem nach einem der Ansprüche 18 bis 22,
**dadurch gekennzeichnet,**
**dass** das Kommunikationssystem zumindest ein Mittel aufweist, das dafür sorgt, dass die systemweit geltende, eindeutige Relativuhr (9) und damit die Relativzeit (16) bis zum Herunterfahren des Systems für alle Teilnehmer gültig bleibt.

24. Kommunikationssystem nach einem der Ansprüche 18 bis 23,
**dadurch gekennzeichnet,**
**dass** das Kommunikationssystem zumindest ein Mittel aufweist, das die Synchronisierung aller Teilnehmer auf die systemweit geltende, eindeutige Relativuhr (9) und damit die Relativzeit (16) bis zum Herunterfahren des Systems aufrecht erhält.

25. Kommunikationssystem nach einem der Ansprüche 18 bis 24
**dadurch gekennzeichnet,**
**dass** das Kommunikationssystem zumindest ein Mittel aufweist, das die Dauer des Kommunikationstakts einstellt.

26. Kommunikationssystem nach Anspruch 25,
**dadurch gekennzeichnet,**
**dass** das Kommunikationssystem zumindest ein Mittel aufweist, das die Dauer des Kommunikationstakts zwischen 10µs und 10ms einstellt.

27. Kommunikationssystem nach einem der Ansprüche 18 bis 26
**dadurch gekennzeichnet,**
**dass** das Kommunikationssystem zumindest ein Mittel aufweist, welches die Dauer eines Kommunikationstakts wenigstens einmal beim Hochfahren des Systems festlegt.

28. Kommunikationssystem nach einem der Ansprüche 18 bis 27,
**dadurch gekennzeichnet,**
**dass** das Kommunikationssystem zumindest eine dezentrale Ein-/ Ausgabe-Baugruppe (2, 3) aufweist, die Signale eines zu steuernden Geräts bei deren Registrierung und Erfassung am Eingang der dezentralen Ein-/Ausgabe-Baugruppe (2, 3) mit einem Stempel (20) versieht, der sich aus der zu diesem Zeitpunkt aktuellen Relativzeit (16) und dem Erfassungs-Schaltereignis zusammensetzt, in ein für das Datennetz (1) kompatibles Datenformat umwandelt und die Daten mit diesem Stempel (20) über das Datennetz (1) an die Kontrolleinheit (8) zur Auswertung und weiteren Verarbeitung weiterleitet, wobei die Relativzeit (16) als Teil des Stempels (20) aus zwei Teilen besteht, wobei der eine Teil den Kommunikationszyklus des Kommunikationssystems bestimmt, in welchem die Registrierung und Signalerfassung erfolgt ist und der andere Teil den Zeitpunkt relativ zum Anfang oder zum Ende des Kommunikationszyklus des Kommunikationssystems bestimmt, in welchem die Registrierung und Signalerfassung erfolgt ist.

29. Kommunikationssystem nach einem der Ansprüche 18 bis 28,
**dadurch gekennzeichnet,**
**dass** das Kommunikationssystem zumindest eine Kontrolleinheit (8) aufweist, die Daten, die für das zu steuernde Gerät bestimmt sind, vor der Übertragung an die dezentrale Ein-/Ausgabe-Baugruppe (2, 3) mit einem Stempel (27) versieht, der sich aus einer Relativzeit (16), bezogen auf den Zeitpunkt der geplanten Signalausgabe und einem Ausgabe-Schaltereignis zusammensetzt, und die Daten mit diesem Stempel (27) über das Datennetz (1) an die dezentrale Ein-/Ausgabe-Baugruppe (2, 3) überträgt, wobei die Relativzeit (16) als Teil des Stempels (27) aus zwei Teilen besteht, wobei der eine Teil den Kommunikationszyklus des Kommunikationssystems bestimmt, in dem die Signalausgabe erfolgen soll und der andere Teil den Zeitpunkt relativ zum Anfang oder zum Ende des Kommunikationszyklus des Kommunikationssystems bestimmt, in welchem die Signalausgabe erfolgen soll.

30. Kommunikationssystem nach einem der Ansprüche 18 bis 29,
**dadurch gekennzeichnet,**
**dass** das Kommunikationssystem zumindest eine dezentrale Ein-/ Ausgabe-Baugruppe (2, 3) aufweist, die Daten, die mit einem Stempel (27), der sich auf die geplante Signalausgabe bezieht, versehen und für das zu steuernde Gerät bestimmt sind, in für das zu steuernde Gerät interpretierbare Signale umwandelt und zu dem Zeitpunkt, der durch den übertragenen Stempel vorgegeben ist, am Ausgang der dezentralen Ein-/Ausgabe-Baugruppe (2, 3) gemäss des vorgegebenen Schaltereignisses schaltet und an das zu steuernde Gerät ausgibt.

31. Kommunikationssystem nach einem der Ansprüche 18 bis 30,
**dadurch gekennzeichnet,**
**dass** das Kommunikationssystem zumindest ein Mittel aufweist, das dafür sorgt, dass die Schaltung und Weiterleitung von Signalen an ein zu steuerndes Gerät am Ausgang einer dezentralen Ein-/Ausgabe-Baugruppe (2, 3) in zeitlich einstellbarer, definierter Abhängigkeit relativ zum Zeitpunkt der Registrierung und Erfassung von Signalen eines zu steuernden Geräts am Eingang einer dezentralen Ein-/Ausgabe-Baugruppe (2, 3) erfolgt.

32. Kommunikationssystem nach einem der Ansprüche 18 bis 31,
**dadurch gekennzeichnet,**
**dass** das Kommunikationssystem zumindest ein Mittel aufweist, das dafür sorgt, dass Daten die von einem oder mehreren Teilnehmern des Kommunikationssystems bis zum Herunterfahren des Systems gespeichert werden, zusammen mit der jeweils aktuellen Relativzeit (16) des Systems gespeichert werden und die gemeinsame Auswertung und/oder Darstellung der so aufgezeichneten Daten auf Basis der jeweils gespeicherten Relativzeit (16) des Systems erfolgt.

33. Kommunikationssystem nach einem der Ansprüche 18 bis 32,
**dadurch gekennzeichnet,**
**dass** das Kommunikationssystem zumindest einen Teilnehmer, insbesondere eine Automatisierungskomponente, aufweist, der die Relativuhr (9) unterstützt, und der Kenndaten zur Verfügung stellt, die von wenigstens einer Kontrolleinheit (8) über das Datennetz (1) abgerufen und ausgewertet werden können, wobei die Kenndaten wenigstens den Support der Relativuhr (9), und/oder die mögliche einstellbare Genauigkeit und/oder wenigstens eine Einstellmöglichkeit der Relativuhr (9) und/oder den Support wenigstens eines Mechanismus, der sich aus dem Einsatz einer Relativuhr (9) in einem Kommunikationssystem ableitet, enthalten.

34. Kommunikationssystem nach einem der Ansprüche 18 bis 33,
**dadurch gekennzeichnet,**
**dass** das Kommunikationssystem zumindest einen Teilnehmer, insbesondere eine Automatisierungskomponente, aufweist, der die Erfassung von Ereignissen basierend auf der Relativuhr (9) nur in bestimmten Arbeitsphasen und/oder zu bestimmten Zeitpunkten durchführen kann.

## Claims

1. Method for configuring a synchronous, clocked communication system having characteristics of equidistance in the field of industrial systems between at least two stations, especially automation components, and at least one data network (1), **characterized in that** an unambiguous relative clock (9), which is applicable throughout the system, is introduced especially during the system start-up and all stations connected to the data network (1) are synchronized at least once to the relative time (16) determined by the relative clock (9), the relative time (16) being transmitted to all stations via the data network (1).

2. Method according to Claim 1, **characterized in that** at least one control unit (8), at least one unit to be controlled and at least one decentralized input/output module (2, 3), which, as interface between the data network (1) and the unit to be controlled, bidirectionally exchanges signals between the unit to be controlled and the control unit (8) by means of the data network (1), are connected to the data network (1) as stations of the communication system.

3. Method according to Claim 1 or 2, **characterized in that** the unambiguous relative time (16) introduced throughout the system by the relative clock (9) is composed of two parts, the first part characterizing the current communication cycle and the second part determining the time within the current communication cycle of the communication system.

4. Method according to one of the preceding claims, **characterized in that** the communication cycle is represented by a digitized number or an absolute time unit which is derived from the duration of the communication cycle.

5. Method according to one of the preceding claims, **characterized in that** the accuracy of the relative clock (9) can be adjusted within a range between the duration of a communication clock cycle and 1 µs.

6. Method according to one of the preceding claims, **characterized in that** the unambiguous relative clock (9), which is applicable throughout the system, and thus the relative time (16) remains valid for all stations until the system is shut down.

7. Method according to one of the preceding claims, **characterized in that** all stations remain synchronized to the unambiguous relative clock (9), which is applicable throughout the system, and thus to the relative time (16) until the system is shut down.

8. Method according to one of the preceding claims, **characterized in that** the duration of the communication clock cycle is adjustable.

9. Method according to Claim 8, **characterized in that** the duration of a communication clock cycle is between 10 µs and 10 ms.

10. Method according to one of the preceding claims, **characterized in that** the duration of a communication clock cycle is specified at least once during system start-up.

11. Method according to one of the preceding claims, **characterized in that** signals of a device to be controlled when they are registered and detected at the input of a decentralized input/output module (2, 3), are provided by the input/output module (2, 3) with a stamp (20) which is composed of the relative time (16) which is current at this time and the detection switching event, are converted into a data format compatible for the data network (1), the data are forwarded with this stamp (20) via the data network (1) to the control unit where they are evaluated and processed, the relative time (16), as part of the stamp (20), consisting of two parts, one part determining the communication cycle of the communication system in which the registration and signal detection has taken place and the other part determining the time relative to the start or to the end of the communication cycle of the communication system in which the registration and signal detection has taken place.

12. Method according to one of the preceding claims, **characterized in that** data which are intended for the device to be controlled before they are transmitted to the decentralized input/output module (2,3), are provided by the control unit (8) with a stamp (27) which is composed of a relative time (16) referred to the time of the planned signal output and an output switching event, and the data with this stamp (27) are transmitted to the input/output module (2,3) via the data network (1), the relative time (16), as part of the stamp (27), consisting of two parts, one part determining the communication cycle of the communication system in which the signal output is to take place and the other part determining the time relative to the start or to the end of the communication cycle of the communication system in which the signal output is to take place.

13. Method according to one of the preceding claims, **characterized in that** data which are provided with a stamp (27) which relates to the planned signal output and are intended for the device to be controlled are converted by the decentralized input/output module (2, 3) into signals which can be interpreted for the device to be controlled and are switched in accordance with the predetermined switching event at the output of the decentralized input/output module (2, 3) at the time which is predetermined by the transmitted stamp, and are output to the device to be controlled.

14. Method according to one of the preceding claims, **characterized in that** the switching and forwarding of signals to a device to be controlled takes place at the output of a decentralized input/output module (2, 3) in defined dependence, which is adjustable in time, relative to the time of the registration and detection of signals of a device to be controlled at the input of a decentralized input/output module (2, 3).

15. Method according to one of the preceding claims, **characterized in that** data which are stored by one or more stations of the communication system until the system is shut down are stored together with the respective current relative time (16) of the system and the joint evaluation and/or representation of the data thus recorded takes place on the basis of the respective stored relative time (16) of the system.

16. Method according to one of the preceding claims, **characterized in that** one or more stations of the communication system, especially automation components which support the relative clock (9), provide characteristic data which can be called up and evaluated by at least one control unit (8) via the data network (1), the characteristic data containing at least the support of the relative clock (9) and/or the possible adjustable accuracy and/or at least one possibility for adjusting the relative clock (9) and/or the support of at least one mechanism which is derived from the use of a relative clock (9) in a communication system.

17. Method according to one of the preceding claims, **characterized in that** one or more stations of the communication system, especially automation components, can only perform the detection of events within certain operating phases and/or at particular times on the basis of the relative clock (9).

18. Synchronous, clocked communication system having characteristics of equidistance in the field of industrial systems between at least two stations, especially automation components, and at least one data network (1), **characterized in that** the communication system exhibits at least one means which introduces an unambiguous relative clock (9), which is applicable throughout the system, especially during system start-up and synchronizes all or a subset of the connected stations at least once to the relative time (16) determined by the relative clock (9), the relative time (16) being transmitted to all stations via the data network (1).

19. Communication system according to Claim 18, **characterized in that** the communication system exhibits as stations at least one control unit (8), at least one device to be controlled and at least one decentralized input/output module (2, 3) which, as interface between the data network (1) and the device to be controlled, bidirectionally exchanges signals between the device to be controlled and the control unit (8) by means of the data network (1).

20. Communication system according to Claim 18 or 19, **characterized in that** the communication system exhibits at least one means which ensures that the unambiguous relative time (16) introduced throughout the system by the relative clock (9) is composed of two parts, the first part characterizing the current communication cycle and the second part determining the time within the current communication cycle of the communication system.

21. Communication system according to one of Claims 18 to 20, **characterized in that** the communication system exhibits at least one means which ensures that the communication cycle is represented by a digitized number or an absolute time unit which is derived from the duration of the communication cycle.

22. Communication system according to one of Claims 18 to 21, **characterized in that** the communication system exhibits at least one means which ensures that the accuracy of the relative clock (9) is adjusted within a range between the duration of one communication clock cycle and 1 µs.

23. Communication system according to one of Claims 18 to 22, **characterized in that** the communication system exhibits at least one means which ensures that the unambiguous relative clock (9), which is applicable throughout the system, and thus the relative time (16) remains valid for all stations until the system is shut down.

24. Communication system according to one of Claims 18 to 23, **characterized in that** the communication system exhibits at least one means which maintains the synchronization of all stations to the unambiguous relative clock (9), which is applicable throughout the system, and thus to the relative time (16) until the system is shut down.

25. Communication system according to one of Claims 18 to 24, **characterized in that** the communication system exhibits at least one means which adjusts the duration of the communication clock cycle.

26. Communication system according to Claim 25, **characterized in that** the communication system exhibits at least one means which adjusts the duration of the communication clock cycle between 10 µs and 10 ms.

27. Communication system according to one of Claims 18 to 26, **characterized in that** the communication system exhibits at least one means which specifies the duration of a communication clock cycle at least once during the system start-up.

28. Communication system according to one of Claims 18 to 27, **characterized in that** the communication system exhibits at least one decentralized input/output module (2, 3) which provides the signals of a device to be controlled, when they are registered and detected at the input of the decentralized input/output module (2, 3), with a stamp (20) which is composed of the relative time (16) which is current at this time and the detection switching event, are converted into a data format compatible for the data network (1), the data are forwarded with this stamp (20) via the data network (1) to the control unit where they are evaluated and processed, the relative time (16), as part of the stamp (20), consisting of two parts, one part determining the communication cycle of the communication system in which the registration and signal detection has taken place and the other part determining the time relative to the start or to the end of the communication cycle of the communication system in which the registration and signal detection has taken place.

29. Communication system according to one of Claims 18 to 28, **characterized in that** the communication system exhibits at least one control unit (8) which provides data which are intended for the device to be controlled, before they are transmitted to the decentralized input/output module (2, 3), with a stamp (27) which is composed of a relative time (16) referred to the time of the planned signal output and an output switching event, and the data with this stamp (27) are transmitted to the decentralized input/output module (2,3) via the data network (1), the relative time (16), as part of the stamp (27), consisting of two parts, one part determining the communication cycle of the communication system in which the signal output is to take place and the other part determining the time relative to the start or to the end of the communication cycle of the communication system in which the signal output is to take place.

30. Communication system according to one of Claims 18 to 29, **characterized in that** the communication system exhibits at least one decentralized input/output module (2, 3) which converts data which are provided with a stamp (27) which relates to the planned signal output and are intended for the device to be controlled, into signals which can be interpreted for the device to be controlled and switches them in accordance with the predetermined switching event at the output of the decentralized input/output module (2, 3) at the time predetermined by the transmitted stamp and outputs them to the device to be controlled.

31. Communication system according to one of Claims 18 to 30, **characterized in that** the communication system exhibits at least one means which ensures that the switching and forwarding of signals to a device to be controlled takes place at the output of a decentralized input/output module (2, 3) in defined dependence, which is adjustable in time, relative to the time of the registration and detection of signals of a device to be controlled at the input of a decentralized input/output module (2, 3).

32. Communication system according to one of Claims 18 to 31, **characterized in that** the communication system exhibits at least one means which ensures that data which are stored by one or more stations of the communication system until the system is shut down are stored together with the respective current relative time (16) of the system and the joint evaluation and/or representation of the data thus recorded takes place on the basis of the respective stored relative time (16) of the system.

33. Communication system according to one of Claims 18 to 32, **characterized in that** the communication system exhibits at least one station, especially an automation component, which supports the relative clock (9) and which provides characteristic data which can be called up and evaluated by at least one control unit (8) via the data network (1), the characteristic data containing at least the support of the relative clock (9) and/or the possible adjustable accuracy and/or at least one possibility of adjusting the relative clock (9) and/or the support of at least one mechanism which is derived from the use of a relative clock (9) in a communication system.

34. Communication system according to one of Claims 18 to 33, **characterized in that** the communication system exhibits at least one station, especially an automation component, which can only perform the detection of events in certain operating phases and/or at particular times on the basis of the relative clock (9).

## Revendications

1. Procédé de constitution d'un système de communication synchrone et cadencé, ayant des propriétés d'équidistance, dans le domaine des installations industrielles, entre au moins deux participants, notamment des composants d'automatisation, et au moins un réseau ( 1 ) de données,
**caractérisé**
**en ce que**, notamment lors de la mise en route du système, une horloge ( 9 ) relative, définie et valant dans tout le système, est introduite et tous les participants raccordés au réseau ( 1 ) de données sont synchronisés au moins une fois sur le temps ( 16 ) relatif défini par l'horloge ( 9 ) relative, le temps ( 16 ) relatif étant transmis à tous les participants par le réseau ( 1 ) de données.

2. Procédé suivant la revendication 1,
**caractérisé**
**en ce que** sont raccordés au réseau ( 1 ) de données, comme participants du système de communication, au moins une unité ( 8 ) de contrôle, au moins une unité à commander et au moins un module ( 2, 3 ) d'entrée/sortie décentralisé, qui effectue, en tant qu'interface entre le réseau ( 1 ) de données et l'unité à commander, bidirectionnellement l'échange de signaux entre l'unité à commander et l'unité ( 8 ) de contrôle au moyen du réseau ( 1 ) de données.

3. Procédé suivant la revendication 1 ou 2,
**caractérisé**
**en ce que** le temps ( 16 ) relatif, défini et introduit dans tout le système par l'horloge ( 9 ) relative, se compose de deux parties, la première partie caractérisant le cycle de communication instantané et la deuxième partie définissant l'instant à l'intérieur du cycle de communication instantané du système de communication.

4. Procédé suivant l'une des revendications précédentes,
**caractérisé**
**en ce que** le cycle de communication est représenté par un nombre numérisé ou par une unité de temps absolu qui dérive de la durée du cycle de communication.

5. Procédé suivant l'une des revendications précédentes,
**caractérisé**
**en ce que** la précision d'horloge ( 9 ) relative peut être réglée dans une plage comprise entre la durée d'une cadence de communication et 1 µs.

6. Procédé suivant l'une des revendications précédentes,
**caractérisé**
**en ce que** l'horloge ( 9 ) relative défini et valant dans tout le système, et ainsi le temps ( 16 ) relatif restent valables pour tous les participants jusqu'à la réduction en régime du système.

7. Procédé suivant l'une des revendications précédentes,
**caractérisé**
**en ce que** tous les participants restent, jusqu'à la réduction en régime du système, synchronisés sur l'horloge ( 9 ) relative, définie et valant pour tout le système, et ainsi sur le temps ( 16 ) relatif.

8. Procédé suivant l'une des revendications précédentes,
**caractérisé**
**en ce que** la durée de la cadence de communication est réglable.

9. Procédé suivant la revendication 8,
**caractérisé**
**en ce que** la durée d'une cadence de communication est comprise entre 10 µs et 10 ms.

10. procédé suivant l'une des revendications précédentes,
**caractérisé**
**en ce que** la durée d'une cadence de communication est fixée au moins une fois lors de la mise en route du système.

11. Procédé suivant l'une des revendications précédentes,
**caractérisé**
**en ce que** des signaux d'un appareil à commander sont, lors de leur enregistrement et de leur réception à l'entrée d'un module ( 2, 3 ) d'entrée/sortie décentralisé, munis par le module ( 2, 3 ) d'entrée/sortie d'une marque ( 20 ), qui se compose du temps ( 16 ) relatif en vigueur à cet instant de l'événement de commutation de détection et est transformée en un format de données compatibles avec le réseau ( 1 ) de données, les données ayant cette marque ( 20 ) sont acheminées par le réseau ( 1 ) de données à l'unité ( 8 ) de contrôle, y sont exploitées et traitées, le temps ( 16 ) relatif étant constitué en partie de la marque ( 20 ) en deux parties, l'une des parties déterminant le cycle de communication du système de communication, dans lequel s'effectuent l'enregistrement et la détection du signal, et l'autre partie déterminant l'instant par rapport au début ou à la fin du cycle de communication du système de communication, auquel l'enregistrement et la détection du signal sont effectués.

12. procédé suivant l'une des revendications précédentes,
**caractérisé**
**en ce que** des données, qui sont définies pour l'appareil à commander, sont munies avant la transmission au module ( 2, 3 ) d'entrée/sortie décentralisé par l'unité ( 8 ) de contrôle d'une marque ( 27 ), qui se compose d'un temps ( 16 ) relatif rapporté à l'instant de la sortie planifiée du signal et d'un événement de commutation de sortie et les données ayant cette marque ( 27 ) sont transmises par le réseau ( 1 ) de données au module ( 2, 3 ) d'entrée/sortie, le temps ( 16 ) relatif étant constitué comme une partie de la marque ( 27 ) en deux parties, l'une des parties déterminant le cycle de communication du système de communication, dans lequel doit s'effectuer la sortie du signal, et l'autre partie déterminant l'instant par rapport au début ou à la fin du cycle de communication du système de communication, où doit s'effectuer la sortie du signal.

13. Procédé suivant l'une des revendications précédentes,
**caractérisé**
**en ce que** des données, qui sont munies d'une marque ( 27 ), qui se rapporte à la sortie de signal planifiée et déterminée pour l'appareil à commander, sont transformées par le module ( 2, 3 ) d'entrée/sortie décentralisé en des signaux pouvant être interprétés par l'appareil à commander et à l'instant, qui est prescrit par la marque transmise, sont envoyées à la sortie du module ( 2, 3 ) d'entrée/sortie décentralisé suivant l'événement de commutation prescrit et émis vers l'appareil à commander.

14. procédé suivant l'une des revendications précédentes,
**caractérisé**
**en ce que** l'envoi et l'acheminement de signaux à un appareil à commander à la sortie du module ( 2, 3 ) d'entrée/sortie décentralisé s'effectuent à l'entrée d'un module ( 2, 3 ) d'entrée/sortie décentralisé, suivant une fonction définie et réglable dans le temps par rapport à l'instant de l'enregistrement et de la détection de signaux d'un appareil à commander.

15. procédé suivant l'une des revendications précédentes,
**caractérisé**
**en ce que** les données, qui sont mémorisées par un participant ou par plusieurs participants du système de communication jusqu'à la réduction du régime du système, sont mémorisées ensemble avec le temps ( 16 ) relatif instantané respectif du système, et l'exploitation et/ou la représentation conjointe des données ainsi représentées s'effectuent sur la base du temps ( 16 ) relatif mémorisé respectivement du système.

16. procédé suivant l'une des revendications précédentes,
**caractérisé**
**en ce qu'**un participant ou plusieurs participants du système de communication, notamment des composants d'automatisation, qui assistent le temps ( 9 ) relatif, mettent à disposition des données caractéristiques, qui peuvent être appelées et exploitées par au moins une unité ( 8 ) de contrôle par l'intermédiaire du réseau ( 1 ) de données, les données caractéristiques contenant au moins le support de l'horloge ( 9 ) relative et/ou la précision éventuellement réglable et/ou au moins une possibilité de réglage de l'horloge ( 9 ) relative et/ou le support d'au moins un mécanisme, qui dérive de l'introduction d'une horloge ( 9 ) relative dans un système de communication.

17. procédé suivant l'une des revendications précédentes,
**caractérisé**
**en ce qu'**un participant ou plusieurs participants du système de communication, notamment des composants d'automatisation, peuvent effectuer la détection d'évènements fondés sur l'horloge ( 9 ) relative, seulement dans des phases de travail déterminées et/ou à des instants déterminés.

18. Système de communication synchrone et cadencé ayant des propriétés d'équidistance dans le domaine des installations industrielles entre au moins deux participants, notamment des composants d'automatisation, et au moins un réseau ( 1 ) de données,
**caractérisé**
**en ce que** le système de communication a au moins un moyen, qui, notamment lors de la mise en route du système, introduit une horloge ( 9 ) relative définie et valant pour tout le système et tous les participants, ou au moins un sous-groupe des participants, raccordés sont synchronisés au moins une fois sur le temps ( 16 ) relatif défini par l'horloge ( 9 ) relative, le temps ( 16 ) relatif étant transmis à tous les participants par l'intermédiaire du réseau ( 1 ) de données.

19. Système de communication suivant la revendication 18,
**caractérisé**
**en ce que** le système de communication a comme participants au moins une unité ( 8 ) de contrôle, au moins un appareil à commander et au moins un module ( 2, 3 ) d'entrée/sortie décentralisé, qui effectue, en tant qu'interface entre le réseau ( 1 ) de données et l'appareil à commander, bidirectionnellement l'échange de signaux entre l'appareil à commander et l'unité ( 8 ) de contrôle au moyen du réseau ( 1 ) de données.

20. Système de communication suivant la revendication 18 ou 19,
**caractérisé**
**en ce que** le système de communication a au moins un moyen, qui sert à ce que le temps ( 16 ) relatif défini introduit dans tout le système par l'horloge ( 9 ) relative se compose de deux parties, la première partie caractérisant le cycle de communication instantané et la deuxième partie définissant l'instant au sein du cycle de communication instantané du système de communication.

21. système de communication suivant l'une des revendications 18 à 20,
**caractérisé**
**en ce que** le système de communication a au moins un moyen, qui sert à ce que le cycle de communication soit représenté par un nombre numérisé ou par une unité de temps absolu, qui dérive de la durée du cycle de communication.

22. Système de communication suivant l'une des revendications 18 à 21,
**caractérisé**
**en ce que** le système de communication a au moins un moyen, qui sert à ce que la précision de l'horloge ( 9 ) relative soit réglée dans une plage comprise entre la durée d'une cadence de communication et 1 µs.

23. Système de communication suivant l'une des revendications 18 à 22,
**caractérisé**
**en ce que** le système de communication a au moins un moyen, qui sert à ce que l'horloge ( 9 ) relative définie et valant pour tout le système et ainsi le temps ( 16 ) relatif reste valable pour tous les participants jusqu'à la réduction du régime du système.

24. Système de communication suivant l'une des revendications 18 à 23,
**caractérisé**
**en ce que** le système de communication a au moins un moyen, qui maintient la synchronisation de tous les participants sur l'horloge ( 9 ) relative et valant pour tout le système, et ainsi le temps ( 16 ) relatif jusqu'à la réduction du régime du système.

25. Système de communication suivant l'une des revendications 18 à 24,
**caractérisé**
**en ce que** le système de communication a au moins un moyen, qui règle la durée de la cadence de communication.

26. Système de communication suivant la revendication 25,
**caractérisé**
**en ce que** le système de communication a au moins un moyen, qui règle la durée de la cadence de communication entre 10 µs et 10 ms.

27. Système de communication suivant l'une des revendications 18 à 26,
**caractérisé**
**en ce que** le système de communication a au moins un moyen, qui fixe la durée d'une cadence de communication au moins une fois lors de la mise en route du système.

28. Système de communication suivant l'une des revendications 18 à 27,
**caractérisé**
**en ce que** le système de communication a au moins un module ( 2, 3 ) d'entrée/sortie décentralisé, qui munit les signaux d'un appareil à commander, lors de leur enregistrement et de leur détection à l'entrée du module ( 2, 3 ) d'entrée/sortie décentralisé, d'une marque ( 20 ), qui se compose du temps ( 16 ) relatif instantané à cet instant et de l'événement de commutation de détection, les transforme en un format de données compatibles avec le réseau ( 1 ) de données et achemine, pour l'exploitation et le traitement ultérieur, les données ayant cette marque ( 20 ) à l'unité ( 8 ) de contrôle par l'intermédiaire du réseau ( 1 ) de données, le temps ( 16 ) relatif étant constitué en tant que partie de la marque ( 20 ) en deux parties, l'une des parties déterminant le cycle de communication du système de communication, dans lequel s'effectuent l'enregistrement et la détection du signal, et l'autre partie déterminant l'instant par rapport au début ou à la fin du cycle de communication du système de communication, où l'enregistrement et la détection du signal ont lieu.

29. Système de communication suivant l'une des revendications 18 à 28,
**caractérisé**
**en ce que** le système de communication a au moins une unité ( 8 ) de contrôle, qui munit les données, qui sont destinées à l'appareil à commander, avant la transmission au module ( 2, 3 ) d'entrée/sortie décentralisé d'une marque ( 27 ), qui se compose d'un temps ( 16 ) relatif rapporté à l'instant de la sortie planifiée du signal et d'un événement de commutation et transmet les données ayant cette marque ( 27 ) au module ( 2, 3 ) d'entrée/sortie décentralisé par l'intermédiaire du réseau ( 1 ) de données, le temps ( 16 ) relatif étant constitué en tant que partie de la marque ( 27 ) en deux parties, la première partie déterminant le cycle de communication du système de communication, dans lequel doit s'effectuer la sortie du signal, et l'autre partie déterminant l'instant par rapport au début ou par rapport à la fin du cycle de communication du système de communication, où doit s'effectuer la sortie du signal.

30. Système de communication suivant l'une des revendications 18 à 29,
**caractérisé**
**en ce que** le système de communication a au moins un module ( 2, 3 ) d'entrée/sortie décentralisé, qui munit les données d'une marque ( 27 ), qui se rapporte à la sortie planifiée du signal, et qui sont destinées à l'appareil à commander, les transforme en des signaux pouvant être interprétés par l'appareil à commander et à l'instant qui est prescrit par la marque transmise se branche à la sortie du module ( 2, 3 ) d'entrée/sortie décentralisé suivant l'événement de commutation prescrit et émet vers l'appareil à commander.

31. système de communication suivant l'une des revendications 18 à 30,
**caractérisé**
**en ce que** le système de communication a au moins un moyen, qui fait que la connexion et l'acheminement de signaux à un appareil à commander à la sortie d'un module ( 2, 3 ) d'entrée/sortie décentralisé s'effectuent à l'entrée d'un module ( 2, 3 ) d'entrée/sortie décentralisé, suivant une fonction définie et réglable dans le temps par rapport à l'instant de l'enregistrement et la détection de signaux d'un appareil à commander.

32. Système de communication suivant l'une des revendications 18 à 31,
**caractérisé**
**en ce que** le système de communication a au moins un moyen, qui fait que des données, qui sont mémorisées par un participant ou par plusieurs participants du système de communication jusqu'à la réduction en régime du système, sont mémorisées conjointement avec le temps ( 16 ) relatif instantané respectif du système et l'évaluation et/ou la représentation conjointe des données ainsi représentées s'effectuent sur la base du temps ( 16 ) relatif mémorisé respectivement du système.

33. Système de communication suivant l'une des revendications 18 à 32,
**caractérisé**
**en ce que** le système de communication a au moins un participant, notamment un composant d'automatisation, qui assiste l'horloge ( 9 ) relative et qui met à disposition des données caractéristiques, qui peuvent être appelées et exploitées par au moins une unité ( 8 ) de contrôle par l'intermédiaire du réseau ( 1 ) de données, les données caractéristiques comprenant au moins le support de l'horloge ( 9 ) relative et/ou la précision éventuellement réglable et/ou au moins une possibilité de réglage de l'horloge ( 9 ) relative et/ou le support d'au moins un mécanisme, qui dérive de l'introduction d'une horloge ( 9 ) relative dans un système de communication.

34. Système de communication suivant l'une des revendications 18 à 32,
**caractérisé**
**en ce que** le système de communication a au moins un participant, notamment un composant d'automatisation, qui peut effectuer la détection d'évènements sur la base de l'horloge ( 9 ) relative seulement dans certaines phases de travail et/ou à certains instants.
